# EUROPÄISCHE PATENTSCHRIFT

(11) **EP 2 715 833 B1**
(45) Veröffentlichungstag und Bekanntmachung des Hinweises auf die Patenterteilung: **08.03.2017**
(21) Anmeldenummer: 12717609.7
(22) Anmeldetag: 26.04.2012
(51) Int. Cl.: H01M 10/625, H01M 10/647, H01M 10/6554, H01M 2/10, H01M 10/04

(54) **ENERGIESPEICHERMODUL AUS MEHREREN PRISMATISCHEN SPEICHERZELLEN**
ENERGY STORAGE MODULE COMPRISING A PLURALITY OF PRISMATIC STORAGE CELLS
MODULE D'ACCUMULATION D'ÉNERGIE COMPOSÉ DE PLUSIEURS CELLULES D'ACCUMULATION PRISMATIQUES

(30) Priorität: 27.05.2011 DE 102011076580
(43) Veröffentlichungstag der Anmeldung: 09.04.2014
(73) Patentinhaber: Bayerische Motoren Werke Aktiengesellschaft, 80809 München (DE)
(72) Erfinder: GOESMANN, Hubertus, 89564 Nattheim-Auernheim (DE); LATH, Björn, 80805 München (DE)
(86) Internationale Anmeldenummer: PCT/EP2012/001778
(87) Internationale Veröffentlichungsnummer: WO 2012/163453

(56) Entgegenhaltungen:
- WO-A-2011/134697
- DE-A1-102005 031 504
- DE-A1-102009 048 250

## Beschreibung

Die Erfindung betrifft ein Energiespeichermodul gemäß dem Oberbegriff des Patentanspruches 1.

Ein derartiges Energiespeichermodul ist aus der DE 10 2005 031 504 A1 bekannt. Zum technischen Hintergrund der Erfindung zählt die DE 10 2009 048 250 A1.

In einer üblicherweise als Batterie bezeichneten Vorrichtung zur Spannungsversorgung eines Kraftfahrzeugs kommt meist eine Mehrzahl an Energiespeichermodulen zum Antrieb des Fahrzeugs, beispielsweise von Elektrofahrzeugen oder Hybridfahrzeugen, zum Einsatz. Ein jeweiliges Energiespeichermodul besteht typischerweise aus mehreren gestapelten prismatischen Speicherzellen. Die einzelnen Speicherzellen enthalten elektrochemische Zellen der Batterie. Der Stapel aus den einzelnen Speicherzellen wird zumeist über eine mechanische Endplatte und Zuganker zu dem Energiespeichermodul verspannt. Die Endplatten und Zuganker dienen neben der mechanischen Fixierung der Module zueinander insbesondere dazu, eine Verformung durch Gasdruckänderungen, welche beim Betrieb in den im Inneren der Module angeordneten elektrochemischen Zellen auftreten, entgegenzuwirken. Derartige Energiespeichermodule benötigen in der Regel eine Kühlung, um die Betriebstemperatur sicherzustellen. [0006] Es ist Aufgabe der vorliegenden Erfindung, ein Energiespeichermodul für eine Vorrichtung zur Spannungsversorgung anzugeben, das auf einfache Weise herstellbar ist, und aus dem die Zellwärme auf effektive Weise abführbar ist.

Die Aufgabe wird gelöst durch die Merkmalskombinationen des unabhängigen Anspruchs. Die abhängigen Ansprüche zeigen vorteilhafte Ausgestaltungen der Erfindung.

Somit wird die Aufgabe gelöst durch ein Energiespeichermodul für eine Vorrichtung zur Spannungsversorgung, insbesondere eines Kraftfahrzeugs, aus mehreren prismatischen Speicherzellen. Die Speicherzellen sind zu mindestens einer Reihe gestapelt, hintereinander angeordnet und zwischen zwei Endplatten (auch Druckplatten) über zumindest einen Zuganker verspannt. Der zumindest eine Zuganker ist gleichzeitig als Wärmeleitblech zum Abführen der Wärme aus den Speicherzellen zu einer Kühleinrichtung ausgebildet.

Der oder die Zuganker erfüllen gleichzeitig mehrere Funktionen. Die Zuganker fixieren während der Montage die Speicherzellen und verspannen anschließend die Endplatten. Darüber hinaus ist zumindest ein Zuganker gleichzeitig als Wärmeleitblech ausgebildet. So können die Zuganker auch als Zugelemente oder Befestigungselemente bezeichnet werden.

Aufgrund der geometrisch schmalbauenden Zellen wird die Zellwärme in herkömmlichen Modulen nicht mehr ausreichend über den Zellboden abgeführt. Erfindungsgemäß wird der Zuganker zusätzlich als Wärmeleitblech verwendet, bzw. wird ein unter dem Modul angeordnetes Wärmeleitblech gleichzeitig als Zuganker verwendet. Dies führt zur erfindungsgemäßen einteiligen Ausgestaltung von Zuganker und Wärmeleitblech. Das unter Umständen für die Kühlung schon vorhandene Wärmeleitblech wird somit seitlich hochgezogen. Dadurch können seitliche, separate Zuganker eingespart werden. Die erfindungsgemäßen Zuganker, ausgebildet als Wärmeleitbleche, haben nun zwei Funktionen: zum einen dienen sie der Kühlung des Zellmoduls und zum anderen der Verspannung der Speicherzellen. Ferner hat das seitlich hochgezogene Wärmeleitblech bzw. der als Wärmeleitblech ausgebildete Zuganker den Vorteil, dass die Speicherzellen bei der Montage seitlich nicht verrutschen können.

In besonders bevorzugter Ausbildung ist vorgesehen, dass die Speicherzellen Anschlussterminals aufweisen, die bei allen Speicherzellen gemeinsam auf einer Vorderseite des Energiespeichermoduls angeordnet sind. Ein erster Anteil des Zugankers liegt dabei an der Rückseite des Energiespeichermoduls zumindest teilweise an. Die Rückseite ist definiert als die der Vorderseite gegenüberliegende Seite. Ein zweiter Anteil desselben Zugankers liegt zumindest an einer der beiden Seitenflächen des Energiespeichermoduls teilweise an. Die "Seitenflächen" erstrecken sich zwischen den beiden Endplatten sowie zwischen der Vorderseite und der Rückseite. Wenn von einem "Anliegen" der Zuganker am Energiespeichermodul gesprochen wird, so ist darunter insbesondere ein Anliegen mit wärmeleitfähigem Kontakt zu verstehen. Insbesondere werden die als Wärmeleitbleche ausgebildeten Zuganker mit der Rückseite und/oder den Seitenflächen verklebt und/oder es wird eine Wärmeleitpaste verwendet.

Des Weiteren ist vorteilhafterweise vorgesehen, dass der zweite Anteil des Zugankers mit den beiden Endplatten verbunden ist. So erfolgen die Verspannung und die Kraftübertragung seitlich des Energiespeichermoduls. Des Weiteren ist es von Vorteil, dass der erste Anteil des Zugankers von den Endplatten beabstandet ist. Hier ist insbesondere keine Verbindung zwischen dem ersten Anteil des Zugankers und den Endplatten vorgesehen. Die Abstandsmaße zwischen den Endplatten und den ersten Anteilen des Zugankers sind entsprechend den erforderlichen Luft- und Kriechstrecken zu wählen.

Darüber hinaus ist bevorzugt vorgesehen, dass sich der zweite Anteil des Zugankers über die gesamte Höhe des Energiespeichermoduls erstreckt. Die Höhe ist definiert von der Rückseite bis zur Vorderseite des Energiespeichermoduls. Dadurch nutzt der Zuganker die komplette Seitenfläche des Energiespeichermoduls zur Wärmeübertragung aus.

Insbesondere sind mehrere Zuganker vorgesehen. Besonders bevorzugt sind zwei Zuganker, die seitlich anliegen und als Wärmeleitbleche ausgebildet sind.

Des Weiteren können noch weitere Zuganker, die nicht als Wärmeleitbleche ausgebildet sind, zwischen den Reihen der Speicherzellen vorgesehen sein.

Bei der Variante mit zumindest zwei Zugankem ist besonders bevorzugt vorgesehen, dass ein erster Anteil eines ersten Zugankers und eines zweiten Zugankers, jeweils ausgebildet als Wärmeleitbleche, an der Rückseite des Energiespeichermoduls zumindest teilweise anliegen, wobei ein zweiter Anteil des ersten Zugankers und des zweiten Zugankers jeweils an einer der beiden Seitenflächen des Energiespeichermoduls zumindest teilweise anliegt.

Alternativ ist ein erster Zuganker auf der Vorderseite (zwischen den Anschlussterminals) und ein zweiter Zuganker auf der Rückseite angeordnet. Die beiden Zuganker sind dann auf der Vorderseite bzw. Rückseite mit den Endplatten verbunden. Insbesondere der untere Zuganker (auf der Rückseite) ersetzt dabei das herkömmliche Wärmeleitblech. In dieser Alternative erfolgt die Verspannung und die Kraftübertragung nicht seitlich des Energiespeichermoduls sondern auf der Vorder- und Rückseite.

Des Weiteren ist es von Vorteil, dass ein einzelner Zuganker aus einem einzelnen Blech besteht. Dadurch können die jeweiligen Zuganker einteilig gefertigt werden.

Um eine ausreichende Wärmeübertragung zu gewährleisten, sind folgende Größenverhältnisse bevorzugt vorgesehen: zumindest 10%, insbesondere zumindest 50%, insbesondere zumindest 75%, der Oberfläche der Rückseite des Energiespeichermoduls steht mit dem Zuganker bzw. den Zugankem in wärmeleitendem Kontakt. Ferner steht zumindest 10%, insbesondere zumindest 50%, insbesondere zumindest 75%, der Oberfläche zumindest einer der beiden Seitenflächen des Energiespeichermoduls mit dem dort anliegenden Zuganker in wärmeleitendem Kontakt.

Die Endplatten (auch Druckplatten) sind bevorzugt thermisch isoliert zu den Speicherzellen aufgebaut.

Das Vorsehen zumindest zweier als Wärmeleitbleche ausgebildeter Zuganker hat den Vorteil, dass das Energiespeichermodul auf einfache Weise montierbar ist. Der Zuganker wird dabei bevorzugt mit den Speicherzellen verklebt. Ferner ist zwischen den Speicherzellen und den Zugankern eine elektrische Isolationsschicht angeordnet. Durch die zweiteilige Ausführung wird beim Zusammenfügen zum einen die Isolationsschicht nicht beschädigt. Zum anderen bleibt der Kleber gleichmäßig verteilt.

Die Erfindung wird nachfolgend anhand der Zeichnung näher erläutert. Dabei zeigt:
- Figur 1: Speicherzellen des erfindungsgemäßen Energiespeichermoduls gemäß dem Ausführungsbeispiel,
- Figur 2: ein Verspannen des erfindungsgemäßen Energiespeichermoduls gemäß Ausführungsbeispiel, und
- Figur 3: eine Detailansicht des erfindungsgemäßen Energiespeichermoduls gemäß Ausführungsbeispiel.

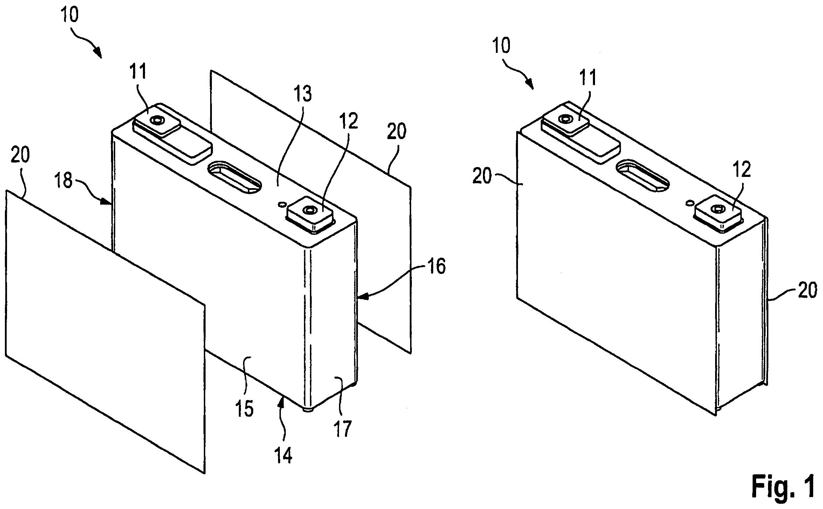

Im Folgenden wird die Erfindung anhand der Figuren 1 bis 3 genauer erläutert.

In Figur 1 ist eine einzelne prismatische Speicherzelle 10 eines in seiner Gesamtheit später dargestellten Energiespeichermoduls 1 in perspektivischer Darstellung zu sehen. Die Speicherzelle 10 besteht typischerweise aus einer oder mehreren einzelnen elektrochemischen Zellen, welche in der hier gewählten Darstellung im Inneren der Speicherzelle 10 im Verborgenen liegen. Auf einer Vorderseite 13 weist die Speicherzelle 10 ein Anschlussterminal 11 erster Polarität und ein Anschlussterminal 12 zweiter Polarität auf. Auf der in der Figur nicht dargestellten Rückseite 14 der Speicherzelle 10 sind keine Anschlussterminals vorgesehen. Eines der Anschlussterminals 11, 12, typischerweise der Plus-Pol der Speicherzelle, kann elektrisch mit einem Gehäuse der Speicherzelle 10 verbunden sein.

Da in dem erfindungsgemäßen Energiespeichermodul 1 mehrere der Speicherzellen 10 zumindest in einer Reihe gestapelt hintereinander angeordnet werden, werden zumindest gegenüberliegende Hauptflächen 15, 16 mit einem elektrisch isolierenden Material versehen. In dem in Figur 1 dargestellten Ausführungsbeispiel wird eine Klebefolie 20 auf die Hauptflächen 15, 16 aufgebracht Alternativ könnte auf die Hauptflächen 15, 16 auch ein elektrisch isolierender Kleber aufgebracht werden. Ebenso wäre die Verwendung eines Schrumpfschlauchs, der auf die mit Kleber versehenen Hauptflächen 15, 16 aufgebracht wird, denkbar.

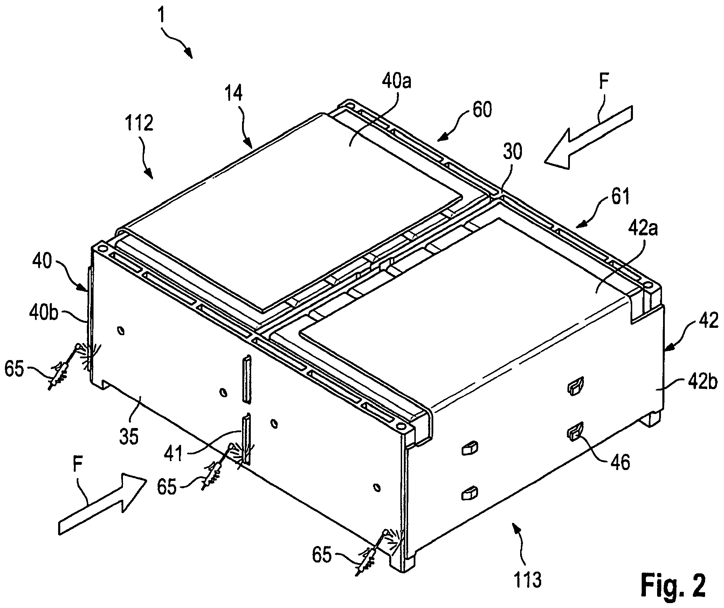

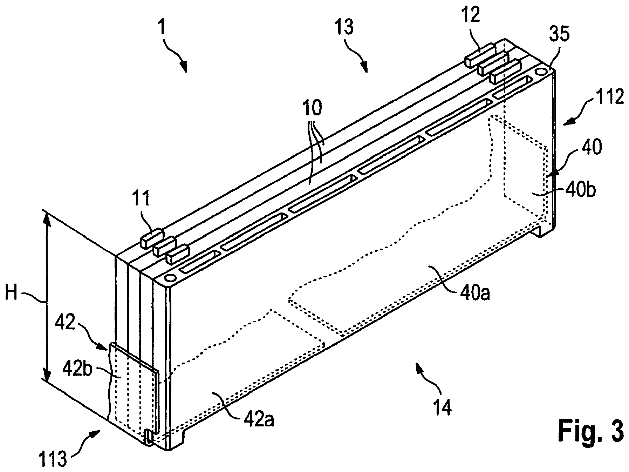

Bei dem erfindungsgemäßen Energiespeichermodul werden die Speicherzellen 10 in lediglich beispielhaft zwei Speicherzellen-Reihen 60, 61 angeordnet, wie dies beispielsweise Figur 2 zu entnehmen ist. Alternativ zeigt Figur 3 ein Beispiel mit nur einer Reihe 60. Die Verspannung der zu einer Reihe gestapelten Speicherzellen erfolgt im Ausführungsbeispiel unter Verwendung von Endplatten 30, 35 und Zugankern 40 bis 42. In der Figur 2 ist ein Zwischenbauteil einer Spannvorrichtung dargestellt, bei dem eine Endplatte 30, die auch als Druckplatte bezeichnet wird, mit drei Zugankem 40, 41, 42 verschweißt wird bzw. ist. Die Zuganker 40, 41, 42 sind derart zueinander beabstandet, dass jeweils ein Aufnahmebereich für die jeweilige Speicherzellen-Reihe 60, 61 geschaffen ist. Jede der Speicherzellen-Reihen ist damit seitlich von zwei Zugankern 40, 41 bzw. 41, 42 umgeben.

Darüber hinaus sind an dem Zuganker 42 vier Laschen 46 vorgesehen, an denen eine Steuerung befestigt werden kann. Im Vergleich zu den Zugankern 40, 42 ist der mittlere Zuganker 41 dicker ausgebildet. Beispielsweise weisen die Zuganker 40, 42 eine Dicke von 2 mm und der Zuganker 43 eine Dicke von 3 mm auf. Hierdurch ist eine gleichmäßige Ausdehnung des Energiespeichermoduls parallel zur Kraftrichtung der Verspannung (d.h. in Erstreckungsrichtung der Zuganker 40, 41, 42) sichergestellt, wenn sich die Speicherzellen 10 in den beiden Speicherzellen-Reihen aufgrund von Gasdruckänderungen, welche beim Betrieb der Speicherzellen 10 auftreten, verformen.

Die Verschweißung als Verbindung zwischen den Zugankern 40, 41, 42 und den Endplatten 30, 35 stellt ein schnelles, sicheres und etabliertes Verbindungsverfahren im Bereich der Automobiltechnik dar. Prinzipiell könnte die Herstellung der mechanischen Verbindung der in Figur 2 gezeigten Komponenten auch auf alternative Weise erfolgen, beispielsweise durch Verschraubung oder jede beliebige andere form- und/oder kraftschlüssige Verbindung. Während die beiden äußeren Zuganker 40, 42 zur Verschweißung mit den Endplatten 30, 35 mit deren Stirnseiten bündig in Anlage gebracht und verschweißt werden, wird der Zuganker 41, der im Bereich seiner beiden gegenüberliegenden Enden jeweils eine Nut zur Bereitstellung jeweiliger Durchstecklaschen aufweist, in korrespondierende Aussparungen den Endplatten 30, 35 gesteckt und dann von der anderen Seite her verschweißt.
Figur 3 zeigt eine Detailansicht des erfindungsgemäßen Energiespeichermoduls 1. Hier ist lediglich die Reihe 60 vorgesehen. Dadurch entfällt der mittlere Zuganker 41. Ansonsten entspricht die Darstellung in Figur 3 der Darstellung aus Figur 2. In den Figuren 2 und 3 ist gut zu sehen, dass der erste Zuganker 40 unterteilt ist in einen ersten Anteil 40a und einen zweiten Anteil 40b. In symmetrischer Anordnung ist auch der zweite Zuganker 42 unterteilt in einen ersten Anteil 42a und einen zweiten Anteil 42b. Die jeweiligen ersten Anteile 40a und 42a liegen auf der Rückseite 14 am Energiespeichermodul 1 an. Die jeweiligen zweiten Anteile 40b und 42b liegen an Seitenflächen 112 und 113 des Energiespeichermoduls 1 an. Die beiden Seitenflächen 112 und 113 sind definiert als die Flächen zwischen den beiden Endplatten 30, 35, der Vorderseite 13 und der Rückseite 14. Insbesondere stehen die beiden Seitenflächen 112 und 113 senkrecht zu Vorder- und Rückseite 13, 14.

Die beiden erfindungsgemäßen Zuganker 40, 42 ermöglichen ein Abführen der Wärme aus den Speicherzellen 10. Insbesondere ist vorgesehen, dass die als Wärmeleitbleche ausgebildeten Zuganker 40, 42 mit einer Kühleinrichtung in wärmeleitendem Kontakt stehen.

Aufgrund der Fertigungstoleranzen der einzelnen Speicherzellen 10 ist es möglich, dass die Rückseite 14 an den einzelnen Speicherzellen 10 nicht in einer Ebene liegt. Zu diesem Zweck wird ein Wärmeleitkleber auf insbesondere die ersten Anteile 40a, 42a der Zuganker 40, 42 aufgebracht. Durch den Wärmeleitkleber wird dabei ein Ausgleich unterschiedlicher Höhen der Rückseite 14 realisiert. Um sicherzustellen, dass sämtliche Speicherzellen 10 über den Wärmeleitkleber mit dem Wärmeleitblech und der Kühleinrichtung verbunden sind, kann in Abhängigkeit einer festgestellten Höhentoleranz eine bedarfsgerechte Mengensteuerung des Wärmeleitklebers erfolgen. In der Praxis ist es ausreichend, wenn eine Distanz zwischen 0,2 und 0,6 mm zwischen den Zugankern 40, 42 und der Rückseite 14 durch den Wärmeleitkleber ausgeglichen werden kann.

Vorstehend sind zwei Ausgestaltungen beschrieben. Bei einer ersten Ausgestaltung ist ein Zuganker als Wärmeleitblech zum Abführen der Wärme aus Speicherzellen zu einer Kühleinrichtung ausgebildet. Der erfindungsgemäße Zuganker hat somit zwei Funktionen: zum einen dient er gemäß seiner ursprünglichen Funktion dem Verspannen der Speicherzellen und zum anderen dient er zusätzlich dem Kühlen des Energiespeichermoduls bzw. der Speicherzellen. Bei einer zweiten Ausgestaltung ist ein unterhalb des Energiespeichermoduls angeordnetes Wärmeleitblech zum Verspannen der Speicherzellen ausgebildet. Hierfür ist das ohnehin vorhandene Wärmeleitblech seitlich hochgezogen, wodurch seitliche, separate Zuganker eingespart werden können. Das erfindungsgemäße Wärmeleitblech hat somit zwei Funktionen: zum einen dient es gemäß seiner ursprünglichen Funktion dem Kühlen des Energiespeichermoduls bzw. der Speicherzellen und zum anderen dient es zusätzlich dem Verspannen der Speicherzellen. Vorteilhafterveise ist bei der zweiten Ausgestaltung das Wärmeleitblech zweigeteilt ausgeführt, wodurch sich das Energiespeichermodul in einfacher Art und Weise zusammenbauen lässt. So wird beim Zusammenbauen eine ggf. zwischen den Speicherzellen und dem Wärmeleitblech angeordnete Isolationsschicht nicht beschädigt und ein zum Verkleben der Speicherzellen mit dem Wärmeleitblech verwendeter Kleber bleibt gleichmäßig verteilt. Beiden Ausgestaltungen ist gemein: das Wärmeleitblech und der zumindest eine Zuganker sind einteilig ausgeführt. Mit andern Worten: Das Energiespeichermodul weist ein Bauelement auf, das sowohl die Funktion eines Zugankers als auch die Funktion eines Wärmeleitblechs übernimmt. Folglich sind beide Ausgestaltungen als absolut gleichwertig anzusehen. Die Verlagerung des mit dieser Patentanmeldung verfolgten Schutzbegehrens weg von einer der beiden Ausgestaltungen hin zu der anderen Ausgestaltung wird deshalb durchaus in Erwägung gezogen.

### Bezugszeichenliste

- 1: Energiespeichermodul
- 10: Speicherzelle
- 11: Anschlussterminal erster Polarität
- 12: Anschlussterminal zweiter Polarität
- 13: Vorderseite
- 14: Rückseite
- 15: Hauptfläche
- 16: Hauptfläche
- 17: Stirnseite
- 18: Stirnseite
- 20: Klebefolie
- 30: Endplatte
- 35: Endplatte
- 40: Zuganker
- 40a: erster Anteil
- 40b: zweiter Anteil
- 41: Zuganker
- 42: Zuganker
- 42a: erster Anteil
- 42b: zweiter Anteil
- 46: Lasche
- 60: Speicherzellen-Reihe
- 61: Speicherzellen-Reihe
- 65: Verschweißung
- 112: erste Seitenflächen
- 113: zweite Seitenflächen
- H: Höhe

## Patentansprüche

1. Energiespeichermodul (1) für eine Vorrichtung zur Spannungsversorgung, insbesondere eines Kraftfahrzeugs, aus mehreren prismatischen Speicherzellen (10), die, zu mindestens einer Reihe (60, 61) gestapelt, hintereinander angeordnet und zwischen zwei Endplatten (30, 35) über zumindest einen Zuganker (40, 42) verspannt sind, wobei der Zuganker (40, 42) einstückig als Wärmeleitblech zum Abführen der Wärme aus den Speicherzellen (10) zu einer Kühleinrichtung ausgebildet ist, wobei das Energiespeichermodul (1) eine Vorderseite (13), eine der Vorderseite (13) gegenüberliegende Rückseite (14) und zwei zwischen den beiden Endplatten (30, 35) und der Vorderseite (13) und der Rückseite (14) angeordnete Seitenflächen (112, 113) aufweist, wobei die Speicherzellen (10) Anschlussterminals (11, 12) aufweisen, die bei allen Speicherzellen (10) gemeinsam auf der Vorderseite (13) des Energiespeichermoduls (1) angeordnet sind, wobei auf der Rückseite (14) des Energiespeichermoduls (1) keine Anschlussterminals (11, 12) angeordnet sind, wobei ein erster Anteil (40a, 42a) des Zugankers (40, 42) an der Rückseite (14) des Energiespeichermoduls (1) zumindest teilweise anliegt, und wobei ein zweiter Anteil (40b, 42b) des selben Zugankers (40, 42) an zumindest einer der beiden Seitenflächen (112, 113) des Energiespeichermoduls (10) teilweise anliegt, und das sich der zweite Anteil (40b, 42b) des Zugankers (40, 42) über die gesamte Höhe (H) des Energiespeichermoduls (10), insbesondere von der Rückseite (14) bis zur Vorderseite (13), erstreckt.

2. Energiespeichermodul nach Anspruch 1, **dadurch gekennzeichnet, dass** der zweite Anteil (40b, 42b) des Zugankers (40, 42) mit den beiden Endplatten (30, 35) verbunden ist.

3. Energiespeichermodul nach einem der Ansprüche 1 oder 2, **dadurch gekennzeichnet, dass** der erste Anteil (40a, 40b) des Zugankers (40, 42) von den Endplatten (30, 35) beabstandet ist.

4. Energiespeichermodul nach einem der vorhergehenden Ansprüche, **gekennzeichnet durch** mehrere Zuganker (40, 42).

5. Energiespeichermodul nach Anspruch 4, **dadurch gekennzeichnet, dass** ein erster Anteil (40a, 42a) eines ersten Zugankers (40) und eines zweiten Zugankers (42), ausgebildet als Wärmeleitbleche, an der Rückseite (14) des Energiespeichermoduls (10) zumindest teilweise anliegen, wobei ein zweiter Anteil (40b, 42b) des ersten Zugankers (40) und des zweiten Zugankers (42) jeweils an einer der beiden Seitenflächen (112, 113) des Energiespeichermoduls (10) teilweise anliegt.

6. Energiespeichermodul nach einem der vorhergehenden Ansprüche, **dadurch gekennzeichnet, dass** ein einzelner Zuganker (40, 42) aus einem einzigen Blech besteht.

7. Energiespeichermodul nach einem der Ansprüche 1 bis 6, **dadurch gekennzeichnet, dass** zumindest 10%, insbesondere zumindest 50%, insbesondere zumindest 75%, der Oberfläche der Rückseite (14) des Energiespeichermoduls (10) mit dem Zuganker (40, 42) bzw. den Zugankern (40, 42) in wärmeleitendem Kontakt steht.

8. Energiespeichermodul nach einem der Ansprüche 1 bis 7, **dadurch gekennzeichnet, dass** zumindest 10%, insbesondere zumindest 50%, insbesondere zumindest 75%, der Oberfläche zumindest einer der beiden Seitenflächen (112, 113) des Energiespeichermoduls (10) mit dem Zuganker (40, 42) in wärmeleitendem Kontakt steht.

## Claims

1. An energy storage module (1) for a power supply device, especially of a motor vehicle, comprising a plurality of prismatic storage cells (10) which, stacked in at least one row (60, 61), are arranged in tandem and are braced between two end plates (30, 35) by at least one tie rod (40, 42), wherein the tie rod (40, 42) is formed integrally as a heat conduction plate for removing the heat from the storage cells (10) to a cooling device, wherein the energy storage module (1) has a front side (13), a rear side (14) opposite the front side (13) and two side faces (112, 113) which are arranged between the two end plates (30, 35) and the front side (13) and the rear side (14), wherein the storage cells (10) have connection terminals (11, 12) which, in all the storage cells (10), are jointly arranged on the front side (13) of the energy storage module (1), wherein no connection terminals (11, 12) are arranged on the rear side (14) of the energy storage module (1), wherein a first part (40a, 42a) of the tie rod (40, 42) at least partly rests on the rear side (14) of the energy storage module (1), and wherein a second part (40b, 42b) of the same tie rod (40, 42) partly rests on at least one of the two side faces (112, 113) of the energy storage module (10), and the second part (40b, 42b) of the tie rod (40, 42) extends over the entire height (H) of the energy storage module (10), especially from the rear side (14) to the front side (13).

2. An energy storage module according to claim 1, **characterised in that** the second part (40b, 42b) of the tie rod (40, 42) is connected to the two end plates (30, 35).

3. An energy storage module according to either claim 1 or claim 2, **characterised in that** the first part (40a, 40b) of the tie rod (40, 42) is at a distance from the end plates (30, 35).

4. An energy storage module accordirig to any one of the preceding claims, **characterised by** a plurality of tie rods (40, 42).

5. An energy storage module according to claim 4, **characterised in that** a first part (40a, 42a) of a first tie rod (40) and of a second tie rod (42), formed as heat conduction plates, rest at least partly on the rear side (14) of the energy storage module (10), a second part (40b, 42b) of the first tie rod (40) and of the second tie rod (42) partly resting in each case on one of the two side faces (112, 113) of the energy storage module (10).

6. An energy storage module according to any one of the preceding claims, **characterised in that** a single tie rod (40, 42) comprises of a single plate.

7. An energy storage module according to any one of claims 1 to 6, **characterised in that** at least 10 %, especially at least 50 %, especially at feast 75 % of the surface of the rear side (14) of the energy storage module (10) is in heat-conducting contact with the tie rod (40, 42) or tie rods (40, 42).

8. An energy storage module according to any one of claims 1 to 7, **characterised in that** at least 10 %, especially at least 50 %, especially at least 75 % of the surface of at least one of the two side faces (112, 113) of the energy storage module (10) is in heat-conducting contact with the tie rod (40, 42).

## Revendications

1. Module accumulateur d'énergie (1) destiné à un dispositif d'alimentation en tension en particulier d'un véhicule constitué de plusieurs cellules d'accumulation prismatiques (10) qui sont situées les unes derrière les autres en étant empilées selon au moins une rangée (60, 61) et sont serrées entre deux plaques d'extrémité (30, 35) par l'intermédiaire d'au moins un tirant d'ancrage (40, 42), ce tirant (40, 42) étant réalisé en une seule pièce sous la forme d'une tôle de transfert thermique pour évacuer la chaleur des cellules d'accumulation (10) vers un dispositif de refroidissement, le module accumulateur d'énergie (1) comprenant une face avant (13), une face arrière (14) opposée à la face avant (13) et deux surfaces latérales (112, 113) situées entre les deux plaques d'extrémité (30, 35) et la face avant (13) et la face arrière (14), les cellules d'accumulation (10) comprenant des bornes de connexion (11, 12) qui sont situées dans toutes les cellules d'accumulation (10) sur la face avant (13) du module accumulateur d'énergie (1), aucune borne de connexion (11, 12) n'étant située sur la face arrière (14) du module accumulateur d'énergie (1), une première partie (40a, 42a) du tirant d'ancrage (40, 42) s'appliquant au moins partiellement sur la face arrière (14) du module accumulateur d'énergie et une seconde partie (40b, 42b) du même tirant (40, 42) s'appliquant partiellement sur au moins l'une des deux surfaces latérales (112, 113) du module accumulateur d'énergie (10), et la seconde partie (40b, 42b) du tirant (40, 42) s'étendant sur la totalité de la hauteur (H) du module accumulateur d'énergie (10) en particulier de sa face arrière (14) à sa face avant (13).

2. Module accumulateur d'énergie conforme à la revendication 1,
**caractérisé en ce que**
la seconde partie (40b, 42b) du tyran (40, 42) est reliée aux deux plaques d'extrémité (30, 35).

3. Module accumulateur d'énergie conforme à l'une des revendications 1 et 2,
**caractérisé en ce que**
la première partie (40a, 40b) du tirant d'ancrage (40, 42) est située à distance des plaques d'extrémité (30, 35).

4. Module accumulateur d'énergie conforme à l'une des revendications précédentes,
**caractérisé par**
plusieurs tirants d'ancrage (40, 42).

5. Module accumulateur d'énergie conforme à la revendication 4,
**caractérisé en ce qu'**
une première partie (40a, 42a) d'un premier tirant d'ancrage (40) et d'un second tirant d'ancrage (42) réalisées sous la forme de tôles thermiquement conductrices, s'appliquent au moins partiellement sur la face arrière (14) du module accumulateur d'énergie (10), une seconde partie (40b, 42b) du premier tirant d'ancrage (40) et du second tirant d'ancrage (42) s'appliquant respectivement partiellement sur l'une des deux surfaces latérales (112, 113) du module accumulateur d'énergie (10).

6. Module accumulateur d'énergie conforme à l'une des revendications précédentes,
**caractérisé en ce qu'**
un tirant d'ancrage (40, 42) unique est constitué par une tôle unique.

7. Module accumulateur d'énergie conforme à l'une des revendications 1 à 6,
**caractérisé en ce qu'**
au moins 10%, en particulier au moins 50% et plus particulièrement au moins 75% de la surface de la face arrière (14) du module accumulateur d'énergie (10) est en contact thermiquement conducteur avec le ou les tirant(s) d'ancrage (40, 42).

8. Module accumulateur d'énergie conforme à l'une des revendications 1 à 7,
**caractérisé en ce qu'**
au moins 10%, en particulier au moins 50% et plus particulièrement au moins 75% de la surface d'au moins l'une des deux surfaces latérales (112, 113) du module d'accumulation d'énergie (10) est en contact thermiquement conducteur avec le tirant d'ancrage (40, 42).
